# EUROPÄISCHE PATENTSCHRIFT

(11) **EP 4 405 608 B1**
(45) Veröffentlichungstag und Bekanntmachung des Hinweises auf die Patenterteilung: **25.02.2026**
(21) Anmeldenummer: 22797031.6
(22) Anmeldetag: 22.09.2022
(51) Int. Cl.: F16L 55/07, F15D 1/04

(54) **EINSATZSTÜCK ZUM EINSETZEN IN EINEN KANALABSCHNITT EINES WINKELSTÜCKS**
INSERT PIECE FOR INSERTING INTO A CHANNEL SECTION OF AN ANGLED PIECE
INSERT DESTINÉ À ÊTRE INSÉRÉ DANS UNE SECTION DE CANAL D'UNE PIÈCE COUDÉE

(30) Priorität: 22.09.2021 DE 102021124551
(43) Veröffentlichungstag der Anmeldung: 31.07.2024
(73) Patentinhaber: NORMA Germany GmbH, 63477 Maintal (DE)
(72) Erfinder: SCHNEIDER, David, 63477 Maintal (DE); KINTEA, Daniel, 63477 Maintal (DE); CLASEN, Hannes, 63477 Maintal (DE); GAUDIN, Stéphane, 35580 GUICHEN (FR)
(74) Vertreter: Kusche, Robert
(86) Internationale Anmeldenummer: PCT/EP2022/076373
(87) Internationale Veröffentlichungsnummer: WO 2023/046832

(56) Entgegenhaltungen:
- DE-A1- 102019 103 210
- FR-A5- 2 110 770
- US-A- 4 019 537
- US-A1- 2020 116 289

## Beschreibung

Die Erfindung betrifft Einsatzstücke zum Einsetzen in einen Kanalabschnitt eines Winkelstücks.

In Fahrzeugen werden Fluide, wie z. B. Öl, Treibstoff oder Kühlwasser, mittels Fluidleitungen an verschiedenen Positionen im Fahrzeug bereitgestellt. Diese Leitungen verlaufen in verschiedenen Richtungen und unterschiedlichen Bauräumen, so dass an einigen Positionen Winkelstücke benötigt werden, um die Fluidleitungen "um die Ecke" zu führen. Die Winkelstücke sind dabei als Schnellverbinder zum Verbinden von Fluidleitungen ausgebildet und verbinden zwei Fluidleitungen in einem bestimmten Winkel, z. B. 90°, miteinander. Diese Winkelstücke können beispielsweise durch Spritzgussverfahren hergestellt werden, bei denen Formkerne den Innenraum des Winkelstücks ausformen. Die Formkerne werden nach dem Aushärten des spritzgegossenen Materials aus dem Winkelstück herausgezogen. Für jeden Schenkel des Winkelstücks werden dabei eigene Formkerne genutzt, so dass zwischen den Schenkeln des Winkelstücks eine scharfe Kante entsteht. Wenn anstatt der Kante eine Kurve ausgeformt werden sollte, würde dies eine Hinterschneidung für die Formkerne darstellen, die beim Herausziehen der Formkerne zu Beschädigungen an dem Winkelstück führen könnte. Wenn im Betrieb ein Fluid über diese scharfe Kante strömt, entstehen durch die plötzliche Richtungsänderung Verwirbelungen, die einen starken Druckabfall zur Folge haben. Dieser Druckabfall wirkt sich auf das gesamte Fluidsystem des Fahrzeugs aus, in dem das Winkelstück verbaut ist.

Um diesen Druckabfall zu verringern ist aus DE 10 2019 103 210 A1 bekannt, mindestens ein Führungselement zum Ändern der Strömungsrichtung im Bereich der Kante des Winkelstücks anzuordnen. Das Führungselement leitet dabei das aus dem einen Schenkel über die Kante durch das Winkelstück fließende Fluid in den anderen Schenkel. Es entstehen damit weniger Verwirbelungen, so dass der Druckabfall verringert wird.

Weiter beschreibt US 4 019 537 A beispielsweise eine Anordnung zum Montieren einer Kaskade von Leitschaufeln oder anderen Objekten, die sich über eine Leitung erstrecken, wobei in der Leitung zwei Längstrennwände oder -platten vorgesehen sind, die durch einen kleinen Spalt getrennt sind. Dabei ist das Objekt aus zwei Teilen gebildet, von denen jedes mit einem Ende an einer Wand der Leitung und mit dem anderen an der diesem Befestigungspunkt am nächsten liegenden Längsplatte befestigt ist.

Aufgabe der Erfindung ist es, ein weiter verbessertes Einsatzstück bereitzustellen, das sich einfach in einen Kanalabschnitt eines Winkelstücks einsetzen lässt.

Hauptmerkmale der Erfindung sind im Anspruch 1 angegeben. Ausgestaltungen sind Gegenstand der Ansprüche 2 bis 9.

Bei einem Einsatzstück zum Einsetzen in einen Kanalabschnitt eines Winkelstücks zum fluidkommunizierenden Verbinden von Fluidleitungen, wobei das Einsatzstück eine Halterung zum Anlegen an den Kanalabschnitt und mindestens ein Bauteil aufweist, wobei die Halterung eine Öffnung aufweist und das mindestens eine Bauteil in der Öffnung angeordnet ist und wobei das Bauteil sich zwischen einem ersten Abschnitt der Halterung und einem zweiten Abschnitt der Halterung erstreckt und an der Halterung befestigt ist, wobei die Halterung zwischen dem ersten Abschnitt und dem zweiten Abschnitt eine Ausnehmung aufweist, wobei das Bauteil als Führungselement ausgebildet ist, das eine Strömungsrichtung zumindest eines Teils eines durch den Kanalabschnitt strömenden Fluides zumindest teilweise um einen Änderungswinkel ändert, ist erfindungsgemäß vorgesehen, dass das Führungselement zumindest teilweise eine gebogene Oberfläche zum Ändern der Strömungsrichtung aufweist, wobei sich die gebogene Oberfläche zumindest teilweise um die Ausnehmung erstreckt.

Mit der Erfindung wird ein Einsatzstück bereitgestellt, das eine Halterung mit einer Ausnehmung aufweist. Dabei ist das mindestens eine Bauteil zwischen dem ersten Abschnitt der Halterung mit dem zweiten Abschnitt der Halterung in einer Öffnung der Halterung angeordnet. Das mindestens eine Bauteil ist insbesondere an dem ersten Abschnitt und dem zweiten Abschnitt befestigt. Die Befestigung kann unmittelbar oder mittelbar an dem ersten und zweiten Abschnitt erfolgen. Wenn das Einsatzstück in einem Kanalabschnitts eines Winkelstücks angeordnet ist, kann ein Fluid durch die Öffnung aus einem Schenkel des Winkelstücks in den anderen Schenkel strömen. Der Kanalabschnitt kann dabei zum Ändern einer Strömungsrichtung eines Fluids um einen Änderungswinkel ausgebildet sein.

Die Halterung kann beispielsweise formschlüssig durch eine Art Nut-Feder Verbindung bzw. eine Rastverbindung oder kraftschlüssige Verbindung im Winkelstück gehalten werden. Die Halterung erstreckt sich in Verlängerung der Stirnfläche an dem Kanalabschnitt. Durch die Ausnehmung an der Halterung fällt ein Abschnitt der Halterung weg, der ansonsten zwischen dem Führungselement und der Wand des Kanalabschnitts angeordnet wäre. Durch die Ausnehmung wird somit an dieser Position die Öffnung, in der das Führungselement angeordnet ist, vergrößert. Damit wird eine Reduktion des Strömungsquerschnitts des Fluids zwischen der Halterung und dem mindestens einen Bauteil verringert. Bevorzugt ist die Ausnehmung an der inneren Kante des Winkelstücks angeordnet, wenn das Einsatzstück im Winkelstück angeordnet ist. Mit der Erfindung wird damit ein weiter verbessertes Einsatzstück bereitgestellt, das einen weiter verringerten Druckabfall bewirkt.

Erfindungsgemäß ist das Bauteil als Führungselement ausgebildet, dass eine Strömungsrichtung zumindest eines Teils eines durch den Kanalabschnitt strömenden Fluides zumindest teilweise um einen Änderungswinkel ändert. Der Kanalabschnitt kann dabei zum Ändern einer Strömungsrichtung eines Fluides um einen Änderungswinkel ausgebildet sein. Dabei erstreckt sich das mindestens eine Führungselement zwischen dem ersten Abschnitt der Halterung mit dem zweiten Abschnitt der Halterung und ist in einer Öffnung der Halterung angeordnet. So wird zumindest ein Teil des durch die Öffnung strömenden Fluides durch das Führungselement von dem einen Schenkel in den anderen Schenkel umgeleitet bzw. geführt. Das Auftreten von Verwirbelungen wird so reduziert und somit ein Druckverlust kleingehalten.

Erfindungsgemäß weist das mindestens eine Führungselement zumindest teilweise eine gebogene Oberfläche zum Ändern der Strömungsrichtung auf, wobei sich die gebogene Oberfläche zumindest teilweise um die Ausnehmung erstreckt.

Das Fluid, das durch den Kanalabschnitt des Winkelstücks strömt, kann damit mittels der gebogenen Fläche umgeleitet werden. Dabei kann das Führungselement als gebogener Leitflügel ausgebildet sein. Ein Schenkel des Leitflügels ist bevorzugt entgegen der ankommenden Strömungsrichtung des Fluids ausgerichtet. Der andere Schenkel des Leitflügels ist bevorzugt in die nach dem Passieren des Kanalabschnitts gewünschte abgehende Strömungsrichtung des Fluids ausgerichtet. Durch die Ausnehmung wird der Strömungsquerschnitt des Fluids an der gebogenen Oberfläche maximiert.

Denkbar ist, dass die Halterung zum Beispiel C-förmig ausgebildet ist.

Die Halterung kann dann mit der Öffnung der C-Form zu der Kante des Winkelstücks ausgerichtet werden. Die Öffnung der C-Form entspricht der Ausnehmung der Halterung. Der restliche Teil der Halterung kann zwischen einer Stirnfläche einer an das Winkelstück anzukoppelnden Fluidleitung und einer Aufnahme am Kanalabschnitt angeordnet werden.

Das Einsatzstück kann zum Beispiel mindestens ein Federelement aufweisen, das Verformungen bzw. Verschiebungen aufnehmen kann, so dass diese nicht auf das mindestens eine Bauteil, das insbesondere als Führungselement ausgebildet ist, übertragen werden.

Mit dem Federelement können damit insbesondere Verformungen, die beim Einführen des Einsatzstücks in das Winkelstücke auftreten, in Bezug auf das mindestens eine Führungselement ausgeglichen werden. Das Winkelstück kann am Kanalabschnitt z. B. eine Nut zum Aufnehmen der Halterung aufweisen. Die Halterung kann dann durch einen Schenkel des Winkelstücks bis zur Nut geschoben werden. In der Nut kann die Halterung einrasten. Auf dem Weg zur Nut wird die Halterung durch die Innenwände des Schenkels getaucht, wobei das mindestens eine Federelement die Stauchung aufnimmt und von dem mindestens einen Führungselement abschirmt. Somit kann eine Beschädigung des mindestens einen Bauteils bzw. des Führungselements durch auf die Halterung wirkende Kräfte vermieden werden.

Weiter kann sich das mindestens eine Federelement in einer Umfangsrichtung um die Öffnung beispielsweise zumindest teilweise entlang der Halterung erstrecken.

Das mindestens eine Federelement kann zum Beispiel durch das Herstellen oder Bereitstellen eines Schlitzes bereitgestellt werden, wobei sich der Schlitz in einer axialen Richtung relativ zur Öffnung durch die Halterung erstreckt. Weiter kann sich der Schlitz in Umfangsrichtung um die Öffnung entlang eines Teils der Halterung erstrecken. Der in Bezug auf den Schlitz radial zur Öffnung außen liegende Teil der Halterung kann dann als Federelement wirken. Auf diese Weise kann eine Art Blattfeder an der Halterung bereitgestellt werden.

Gemäß einem weiteren Beispiel kann das mindestens eine Federelement das mindestens eine Führungselement mit dem ersten Abschnitt und/oder dem zweiten Abschnitt verbinden.

Das mindestens eine Federelement kann als Lager für das mindestens eine Führungselement wirken. Das mindestens eine Führungselement ist damit hinsichtlich der Halterung federnd gelagert. Eine Verformung der Halterung kann durch die federnde Lagerung des mindestens einen Führungselement reduziert werden.

Weiter kann das mindestens eine Federelement zum Beispiel als ein elastischer Hebel ausgebildet sein, der sich zwischen dem mindestens einen Führungselement und dem ersten Abschnitt und/oder zweiten Abschnitt erstreckt.

Ein elastischer Hebel kann das mindestens eine Führungselement in einem Abstand zum Halterung besonders effektiv elastisch lagern.

In einem weiteren Beispiel kann das mindestens eine Führungselement ein Stützelement aufweisen, wobei das mindestens eine Führungselement über das Stützelement mit dem mindestens einen Federelement verbunden ist.

Damit kann das mindestens eine Federelement über das Stützelement eine federnde Lagerung für das mindestens eine Führungselement an der Halterung bereitstellen. Wenn mehrere Führungselemente mit dem Stützelement verbunden sind, kann damit auf effektive Weise eine federnde Lagerung für alle mit dem Stützelement verbundene Führungselement bewirkt werden.

Weiter kann das mindestens eine Federelement beispielsweise als ein Pressringabschnitt ausgebildet sein, der relativ zur Öffnung radial außen an der Halterung angeordnet ist.

Die Halterung kann dabei zum Beispiel eine Vielzahl von Pressringabschnitten aufweisen. Mittels der Pressringabschnitte können radial zur Öffnung wirkende Kräfte durch das mindestens eine Federelement aufgenommen werden, bevor eine Kraftübertragung auf die Halterung und damit das mindestens eine Führungselement erfolgt.

Weiter betrifft die Erfindung ein Winkelstück zum fluidkommunizierenden Verbinden von Fluidleitungen, wobei das Winkelstück einen Kanalabschnitt zum Ändern einer Strömungsrichtung eines durch das Winkelstück strömenden Fluids um einen Änderungswinkel und ein Einsatzstück nach einem der vorhergehenden Ansprüche aufweist, wobei das Einsatzstück in dem Kanalabschnitt angeordnet ist.

Vorteile und Wirkungen sowie Weiterbildungen des Winkelstücks ergeben sich aus den Vorteilen und Wirkungen sowie Weiterbildungen des oben beschriebenen Einsatzstücks. Es wird daher in dieser Hinsicht auf die vorangegangene Beschreibung verwiesen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Darstellung eines Einsatzstücks gemäß dem Stand der Technik, wie er beispielsweise in WO 2020/161190 A1 beschrieben ist,
- Fig. 2: eine schematische Darstellung eines in ein Winkelstück eingesetztes Einsatzstück gemäß dem Stand der Technik, wie er beispielsweise in WO 2020/161190 A1 beschrieben ist,
- Fig. 3: eine schematische Darstellung eines Einsatzstücks,
- Fig. 4: eine schematische Darstellung eines in ein Winkelstück eingesetztes Einsatzstück,
- Fig. 5: eine schematische Darstellung eines Einsatzstücks mit Federelement,
- Fig. 6a-c: eine schematische Darstellung eines Einsatzstücks mit Federelement in weiteren Ausführungsbeispielen, und
- Fig. 7: eine schematische Darstellung eines Einsatzstücks in einem weiteren Ausführungsbeispiel.

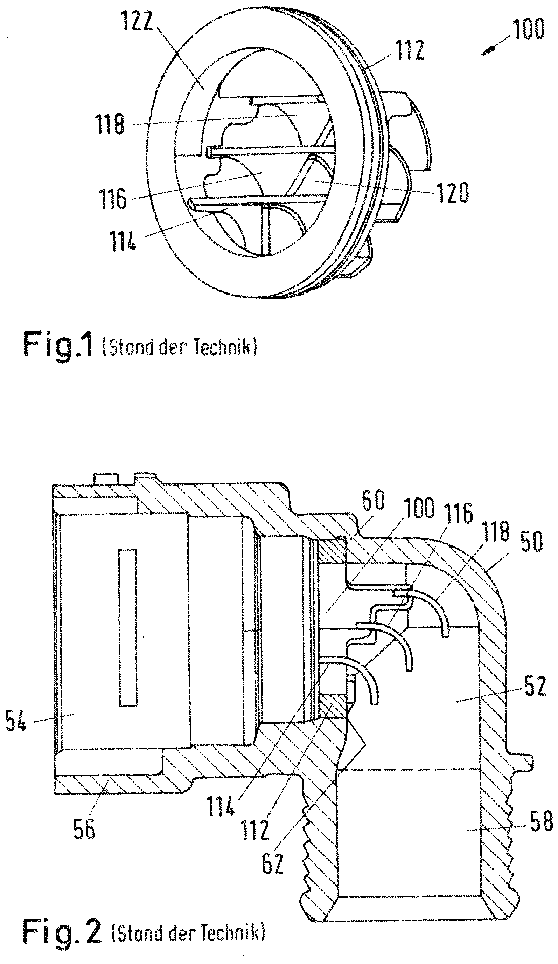

In Figur 1 wird zunächst ein Einsatzstück 100 gemäß dem Stand der Technik dargestellt. Das Einsatzstück 100 weist eine ringförmige Halterung 112 mit einer Öffnung 122 auf. Drei Führungselemente 114, 116, 118 sind derart im Bereich der Öffnung 122 angeordnet, dass ein durch die Öffnung 122 strömendes Fluid auf die Bauelemente, die als Führungselemente 114, 116, 118 ausgebildet sind, trifft. Die Führungselemente 114, 116, 118 sind durch ein Stützelement 120 miteinander verbunden. Das Stützelement 120 stützt sich auf der ringförmigen Halterung 112 ab.

Gemäß Figur 2 ist das Einsatzstück 100 gemäß dem Stand der Technik in einem Winkelstück 50 mit einem ersten Schenkel 56 und einem zweiten Schenkel 58 dargestellt. Das Einsatzstück 100 ist in einem Kanalabschnitt 52 im Winkelstück 50 angeordnet, in dem eine Strömungsrichtung eines durch das Winkelstück 50 einströmenden Fluids um einen Änderungswinkel geändert wird. Das Winkelstück 50 weist eine Aufnahme 60 auf, in der einen ersten Teil der ringförmigen Halterung 112 angeordnet ist. Zwischen dem Führungselement 114 und der Kante 62 des Kanalabschnitts 52 ist ein zweiter Teil der ringförmigen Halterung 112 angeordnet. Der Strömungsquerschnitt zwischen dem zweiten Teil und dem Führungselement 114 ist geringer als der Strömungsquerschnitt zwischen den Führungselementen 114, 116, 118. Zudem verengt die Kante 62 den Abschnitt 52.

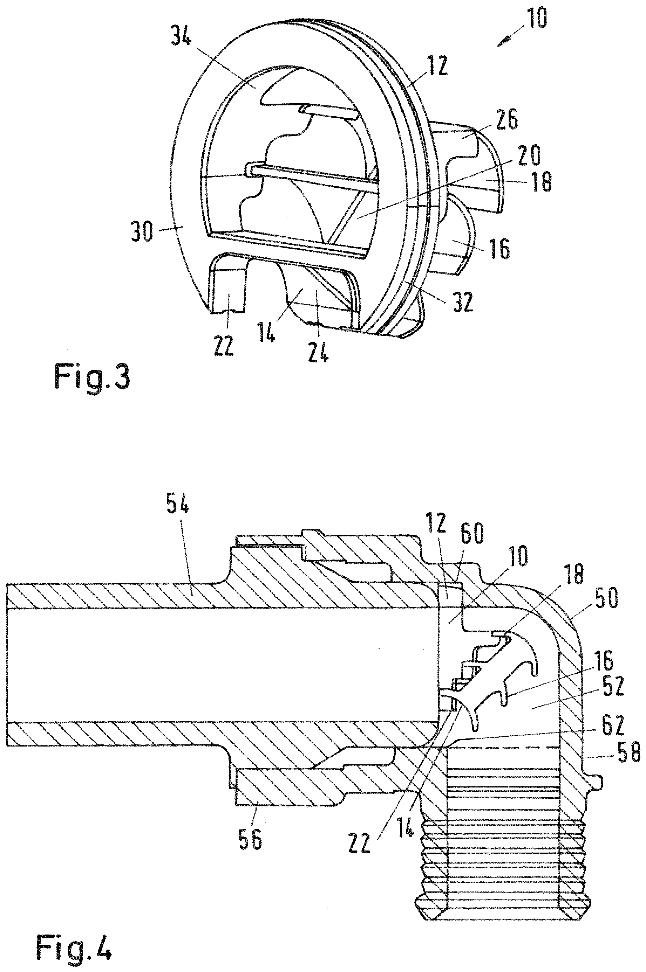

Figur 3 zeigt ein erfindungsgemäßes Einsatzstück 10. Das Einsatzstück 10 weist eine Halterung 12 auf, deren Führungselemente 14, 16, 18 zwischen einem ersten Abschnitt 30 der Halterung 12 und einem zweiten Abschnitt 32 der Halterung 12 befestigt sind.

Dabei weist die Halterung 12 eine Ausnehmung 22 zwischen dem ersten Abschnitt 30 und dem zweiten Abschnitt 32 auf. Die Halterung 12 ist dabei C-förmig ausgebildet.

Das Führungselement 14 umfasst weiter eine gebogene Oberfläche 24. Die gebogene Oberfläche 24 ist konkav gebogen und ist zu der Ausnehmung 22 ausgerichtet.

Die weiteren Führungselemente 16, 18 sind über ein Stützelement 20 mit dem Führungselement 14 verbunden. Das Stützelement 20 stabilisiert die Führungselemente 14, 16, 18.

Zusätzlich können die weiteren Führungselemente 16, 18 über Halteelemente 26 unmittelbar mit der Halterung 12 verbunden sein.

In Figur 4 ist das Einsatzstück 10 in dem Winkelstück 50 gemäß Figur 2 angeordnet. Dabei ist weiter ein Teil der Halterung 12 zwischen der Stirnfläche des Endstücks 54 der Fluidleitung und der Aufnahme 60 angeordnet. Die Ausnehmung 22 ist an der Kante 62 angeordnet. Im Vergleich zu Figur 2 ist ersichtlich, dass an der Position der Ausnehmung 22 in Figur 4 zwischen dem Führungselement 14 und der Kante 62 ein größerer Strömungsquerschnitt für das Fluid zur Verfügung steht.

An der Kante 62 wird damit keine vergrößerte Aufnahme benötigt, um einen Abschnitt der Halterung 12 aufzunehmen. Die Maße des Winkelstücks 50, d. h. die Länge und Höhe müssen daher nicht vergrößert werden, um einen ausreichenden Strömungsquerschnitt für das Fluid zwischen der Kante 62 und dem Führungselement 14 bereitstellen zu können.

Der Teil der Halterung 12, der in der Aufnahme 60 angeordnet ist, kann bündig zu der Innenwand des Kanalabschnitts 52 und einer Innenwand des Endstücks 54 sein. Damit werden Verwirbelungen an der Aufnahme 60 reduziert oder ganz vermieden.

Dabei können die Außenabmessungen von Winkelstücken mit Einsatzstück mit denen üblicher Winkelstücke, also ohne Einsatzstück, übereinstimmen. Dadurch ist ein einfacher Austausch in bestehenden Konfigurationen möglich.

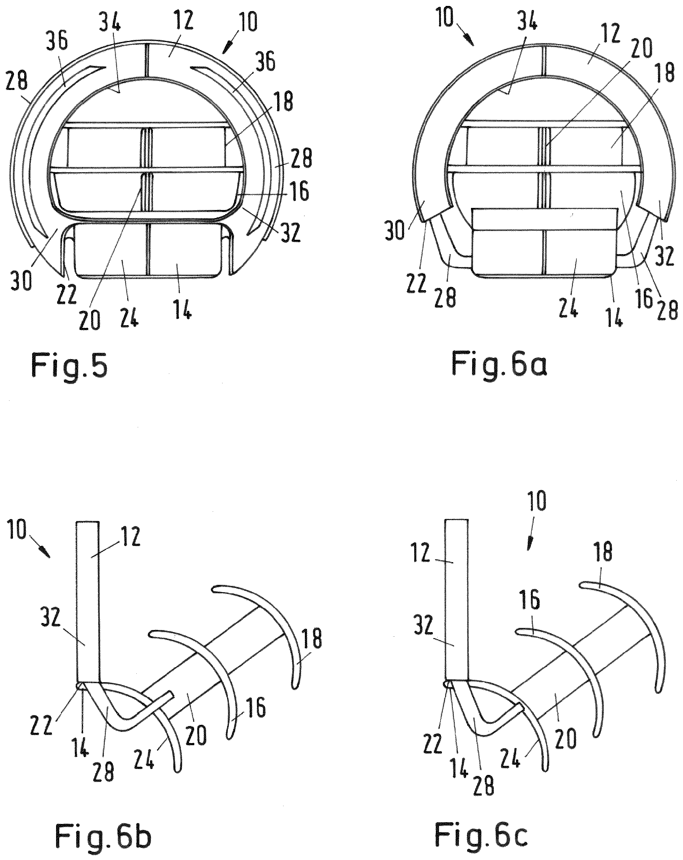

Gemäß den Figuren 5 bis 6 sind weitere Ausführungsbeispiele des Einsatzstückes 10 dargestellt. Das Einsatzstück 10 weist in jeder dieser Ausführungsbeispiele mindestens ein Federelement 28 auf.

In dem Ausführungsbeispiel nach Figur 5 ist das mindestens eine Federelement 28 radial von der Öffnung 34 aus außen an der Halterung 12 angeordnet. Dabei erstreckt sich das mindestens eine Federelement 28 in Umfangsrichtung um die Öffnung 34. Zwischen dem mindestens einen Federelement 28 und der Halterung 12 ist in diesem Beispiel ein Schlitz 36 angeordnet, der sich in Umfangsrichtung erstreckt. Das Federelement 28 aus diesem Beispiel kann durch das Erzeugen des Schlitzes 36 aus dem Material der Halterung 12 hergestellt werden und einstückig mit der Halterung 12 sein.

Das Federelement 28 wirkt in diesem Beispiel wie eine Blattfeder, wenn von außen radial zur Öffnung 34 orientierte Kräfte auf die Halterung 12 wirken. Der Schlitz 36 kann durch diese Kräfte verkleinert werden, ohne dass eine wesentliche Verformung der Halterung 12 erfolgt.

Insbesondere kann damit eine Verformung und eine daraus resultierende Beschädigung der Führungselemente 14, 16, 18 vermieden werden.

In diesem Ausführungsbeispiel nach Figur 5 kann die Halterung 12 mit den Federelementen 28 auch als geschlitzter Pressringabschnitt verstanden werden.

In dem Ausführungsbeispiel nach Figur 6a und 6b ist das mindestens eine Federelement 28 zwischen dem mindestens einen Führungselement 14, 16, 18 angeordnet. Das mindestens eine Federelement 28 kann dazu als Hebel ausgestaltet sein, der das Stützelement 20 mit der Halterung 12 verbindet.

In dem dargestellten Ausführungsbeispiel sind zwei Federelemente 28 dargestellt, wobei eines der Federelemente 28 das Stützelement 20 mit dem ersten Abschnitt 30 verbindet und das andere Federelement 28 das Stützelement 20 mit dem zweiten Abschnitt 32 verbindet.

Die Führungselemente 14, 16, 18 sind nicht unmittelbar mit der Halterung 12 verbunden. Die Befestigung der Führungselemente 14, 16, 18 an der Halterung 12 erfolgt in diesem Ausführungsbeispiel über das Stützelement 20 und die Federelemente 28. Die Führungselemente 14, 16, 18 sind mittels der als Hebel ausgebildeten Federelemente 28 federnd an der Halterung 12 befestigt.

In Figur 6c ist ein weiteres Ausführungsbespiel des Einsatzstücks 10 dargestellt, in dem die als Hebel ausgebildeten Federelemente 28 unmittelbar an dem Führungselement 14 befestigt sind. Damit ist das Führungselement 14 über die Federelemente 28 mit dem ersten Abschnitt 30 und dem zweiten Abschnitt 32 der Halterung 12 verbunden.

Die Führungselemente 16, 18 sind dann über das Stützelement 20, das Führungselement 14 und die Federelemente 28 mit der Halterung 12 verbunden.

Die als Hebel ausgebildeten Federelemente 28 können einstückig mit dem Rest der Halterung 12 und/oder dem gesamten Einsatzstück 10 ausgebildet sein. Dazu kann ein Teil der Halterung 12 dünner ausgestaltet werden, um die Elastizität soweit zu erhöhen, dass Federelemente 28 geschaffen werden.

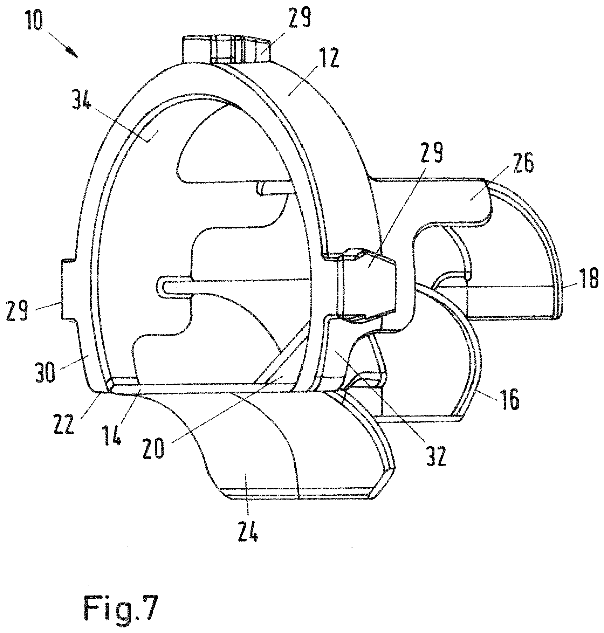

In dem Ausführungsbeispiel gemäß Figur 7 weist die Halterung 12 statt Federelementen 28 an der nach radial außen weisenden Oberfläche Befestigungselemente 29 auf.

Die Befestigungselemente 29 können Hinterschnitte aufweisen, die sich in Umlaufrichtung hinsichtlich der Öffnung 34 erstrecken. Die Hinterschnitte können weiter tangential zu der äußeren Oberfläche der Halterung 12 ausgebildet sein.

In dem Beispiel gemäß Figur 7 sind an einem Außenumfang der Halterung 12 drei Befestigungselemente 29 vorgesehen, die jeweils um ca. 90° versetzt an der Halterung 12 befestigt sind. Es kann jedoch auch jede beliebige Anzahl an Befestigungselementen an der Halterung 12 befestigt sein. Auch die Position der Befestigungselemente an der Halterung 12 kann beliebig gewählt werden. Diese Befestigungselemente 29 können dabei in entsprechende Ausnahmen im Winkelstück eingeführt bzw. verrastet werden, wobei sie insbesondere in Umfangsrichtung deformiert werden. Eine Verformung der Halterung wird dadurch vermieden.

In allen Ausführungsbeispielen kann das Einsatzstück einstückig mit dem oder den Bauteilen bzw. Führungselementen ausgebildet sein. Weiter kann das Einsatzstück aus einem Material hergestellt sein, dass keine Hydrolyse unterliegt, wie z. B. Polyphenylensulfid (PPS).

Die Erfindung ist nicht auf eine der vorbeschriebenen Ausführungsformen beschränkt, sondern in vielfältiger Weise abwandelbar. Insbesondere lassen sich die Ausführungen zu Führungselementen auf andere Arten von Bauteilen, die durch die Halterung in einem Kanalabschnitt befestigt werden sollen, übertragen. Der Schutzbereich der Erfindung wird durch die beigefügten Ansprüche bestimmt.

### Bezugszeichenliste

- 10: Einsatzstück
- 12: Halterung
- 14: Führungselement
- 16: Führungselement
- 18: Führungselement
- 20: Stützelement
- 22: Ausnehmung
- 24: gebogene Oberfläche
- 26: Halteelement
- 28: Federelement
- 29: Befestigungselement
- 30: erster Abschnitt
- 32: zweiter Abschnitt
- 34: Öffnung
- 36: Schlitz

- 50: Winkelstück
- 52: Kanalabschnitt
- 54: Endstück
- 56: erster Schenkel
- 58: zweiter Schenkel
- 60: Aufnahme
- 62: Kante

- 100: Einsatzstück
- 112: Halterung
- 114: Führungselement
- 116: Führungselement
- 118: Führungselement
- 120: Stützelement
- 122: Öffnung

## Patentansprüche

1. Einsatzstück zum Einsetzen in einen Kanalabschnitt (52) eines Winkelstücks (50) zum fluidkommunizierenden Verbinden von Fluidleitungen, wobei das Einsatzstück (10) eine Halterung (12) zum Anlegen an den Kanalabschnitt (52) und mindestens ein Bauteil (14, 16, 18) aufweist, wobei die Halterung (12) eine Öffnung (34) aufweist und das mindestens eine Bauteil (14, 16, 18) in der Öffnung (34) angeordnet ist und wobei das mindestens eine Bauteil (14, 16, 18) sich zwischen einem ersten Abschnitt (30) der Halterung (12) und einem zweiten Abschnitt (32) der Halterung (12) erstreckt und an der Halterung (12) befestigt ist, wobei die Halterung (12) zwischen dem ersten Abschnitt (30) und dem zweiten Abschnitt (32) eine Ausnehmung (22) aufweist, wobei das mindestens eine Bauteil als Führungselement (14, 16, 18) ausgebildet ist, das eine Strömungsrichtung zumindest eines Teils eines durch den Kanalabschnitt (52) strömenden Fluides zumindest teilweise um einen Änderungswinkel ändert, wobei das Führungselement (14, 16, 18) zumindest teilweise eine gebogene Oberfläche (24) zum Ändern der Strömungsrichtung aufweist, **dadurch gekennzeichnet, dass** sich die gebogene Oberfläche (24) zumindest teilweise um die Ausnehmung (22) erstreckt.

2. Einsatzstück nach Anspruch 1, **dadurch gekennzeichnet, dass** die Halterung (12) C-förmig ausgebildet ist.

3. Einsatzstück nach einem der Ansprüche 1 oder 2, **dadurch gekennzeichnet, dass** das Einsatzstück (10) mindestens ein Federelement (28), das zum Abschwächen von radial zur Öffnung (34) wirkenden Verformungen auf das mindestens eine Führungselement (14, 16, 18) ausgebildet ist, aufweist.

4. Einsatzstück nach Anspruch 3, **dadurch gekennzeichnet, dass** sich das mindestens eine Federelement (28) in einer Umfangsrichtung um die Öffnung (34) zumindest teilweise entlang der Halterung (12) erstreckt.

5. Einsatzstück nach Anspruch 3 oder 4, **dadurch gekennzeichnet, dass** das mindestens eine Federelement (28) das mindestens eine Führungselement (14, 16, 18) mit dem ersten Abschnitt (30) und/oder dem zweiten Abschnitt (32) verbindet.

6. Einsatzstück nach einem der Ansprüche 3 bis 5, **dadurch gekennzeichnet, dass** das mindestens eine Federelement (28) als ein elastischer Hebel ausgebildet ist, der sich zwischen dem mindestens einen Führungselement (14, 16, 18) und dem ersten Abschnitt (30) und/oder zweiten Abschnitt (32) erstreckt.

7. Einsatzstück nach einem der Ansprüche 3 bis 6, **dadurch gekennzeichnet, dass** das mindestens eine Führungselement (14, 16, 18) ein Stützelement (20) aufweist, wobei das mindestens eine Führungselement (14, 16, 18) über das Stützelement (20) mit dem mindestens einen Federelement (28) verbunden ist.

8. Einsatzstück nach einem der Ansprüche 3 bis 7, **dadurch gekennzeichnet, dass** das mindestens eine Federelement (28) als ein Pressringabschnitt ausgebildet ist, der relativ zur Öffnung (34) radial außen an der Halterung (12) angeordnet ist.

9. Winkelstück zum fluidkommunizierenden Verbinden von Fluidleitungen, wobei das Winkelstück (50) einen Kanalabschnitt (52) zum Ändern einer Strömungsrichtung eines durch das Winkelstück (50) strömenden Fluids um einen Änderungswinkel und ein Einsatzstück (10) nach einem der vorhergehenden Ansprüche aufweist, wobei das Einsatzstück (10) in dem Kanalabschnitt (52) angeordnet ist.

## Claims

1. Insert piece for inserting into a channel section (52) of an angled piece (50) for fluidically connecting fluid lines, wherein the insert piece (10) has a mounting (12) for placing on the channel section (52) and at least one component (14, 16, 18), wherein the mounting (12) has an opening (34) and the at least one component (14, 16, 18) is arranged in the opening (34) and wherein the at least one component (14, 16, 18) extends between a first section (30) of the mounting (12) and a second section (32) of the mounting (12) and is secured to the mounting (12), wherein the mounting (12) has a recess (22) between the first section (30) and the second section (32), wherein the at least one component is configured as a guide element (14, 16, 18) which at least partly changes a flow direction of at least one part of a fluid flowing through the channel section (52) by a change angle, wherein the guide element (14, 16, 18) has at least partially a curved surface (24) for changing the flow direction, **characterized in that** the curved surface (24) extends at least partially around the recess (22).

2. Insert piece according to Claim 1, **characterized in that** the mounting (12) is configured in a C-shaped manner.

3. Insert piece according to either of Claims 1 or 2, **characterized in that** the insert piece (10) has at least one spring element (28) which is configured for weakening deformations acting radially to the opening (34) on the at least one guide element (14, 16, 18).

4. Insert piece according to Claim 3, **characterized in that** the at least one spring element (28) extends in a circumferential direction around the opening (34) at least partially along the mounting (12).

5. Insert piece according to Claim 3 or 4, **characterized in that** the at least one spring element (28) connects the at least one guide element (14, 16, 18) to the first section (30) and/or the second section (32).

6. Insert piece according to one of Claims 3 to 5, **characterized in that** the at least one spring element (28) is configured as a resilient lever which extends between the at least one guide element (14, 16, 18) and the first section (30) and/or second section (32).

7. Insert piece according to one of Claims 3 to 6, **characterized in that** the at least one guide element (14, 16, 18) has a support element (20), wherein the at least one guide element (14, 16, 18) is connected via the support element (20) to the at least one spring element (28).

8. Insert piece according to one of Claims 3 to 7, **characterized in that** the at least one spring element (28) is configured as a compression ring section which is arranged radially outwardly relative to the opening (34) on the mounting (12).

9. Angled piece for fluidically connecting fluid lines, wherein the angled piece (50) has a channel section (52) for changing a flow direction of a fluid flowing through the angled piece (50) by a change angle and an insert piece (10) according to one of the preceding claims, wherein the insert piece (10) is arranged in the channel section (52).

## Revendications

1. Pièce d'insertion destinée à être insérée dans une section de canal (52) d'une pièce d'angle (50) pour relier des conduites de fluide de manière à permettre la communication de fluide, la pièce d'insertion (10) présentant un support (12) destiné à être appliqué contre la section de canal (52) et au moins un composant (14, 16, 18), le support (12) présentant une ouverture (34) et l'au moins un composant (14, 16, 18) étant agencé dans l'ouverture (34), et l'au moins un composant (14, 16, 18) s'étendant entre une première section (30) du support (12) et une deuxième section (32) du support (12) et étant fixé au support (12), le support (12) présentant un évidement (22) entre la première section (30) et la deuxième section (32), l'au moins un composant étant réalisé sous forme d'élément de guidage (14, 16, 18) qui modifie au moins partiellement, d'un angle de modification, une direction d'écoulement d'au moins une partie d'un fluide s'écoulant à travers la section de canal (52), l'élément de guidage (14, 16, 18) présentant au moins en partie une surface courbée (24) pour modifier la direction d'écoulement, **caractérisée en ce que** la surface courbée (24) s'étend au moins en partie autour de l'évidement (22).

2. Pièce d'insertion selon la revendication 1, **caractérisée en ce que** le support (12) est réalisé en forme de C.

3. Pièce d'insertion selon l'une quelconque des revendications 1 ou 2, **caractérisée en ce que** la pièce d'insertion (10) présente au moins un élément élastique (28) qui est réalisé pour atténuer les déformations agissant radialement par rapport à l'ouverture (34) sur l'au moins un élément de guidage (14, 16, 18).

4. Pièce d'insertion selon la revendication 3, **caractérisée en ce que** l'au moins un élément élastique (28) s'étend dans une direction circonférentielle autour de l'ouverture (34) au moins en partie le long du support (12).

5. Pièce d'insertion selon la revendication 3 ou 4, **caractérisée en ce que** l'au moins un élément élastique (28) relie l'au moins un élément de guidage (14, 16, 18) à la première section (30) et/ou à la deuxième section (32).

6. Pièce d'insertion selon l'une quelconque des revendications 3 à 5, **caractérisée en ce que** l'au moins un élément élastique (28) est réalisé sous la forme d'un levier élastique qui s'étend entre l'au moins un élément de guidage (14, 16, 18) et la première section (30) et/ou la deuxième section (32).

7. Pièce d'insertion selon l'une quelconque des revendications 3 à 6, **caractérisée en ce que** l'au moins un élément de guidage (14, 16, 18) présente un élément d'appui (20), l'au moins un élément de guidage (14, 16, 18) étant relié à l'au moins un élément élastique (28) par l'intermédiaire de l'élément d'appui (20).

8. Pièce d'insertion selon l'une quelconque des revendications 3 à 7, **caractérisée en ce que** l'au moins un élément élastique (28) est réalisé sous la forme d'une section d'anneau de pression qui est agencée radialement à l'extérieur par rapport à l'ouverture (34) sur le support (12).

9. Pièce d'angle pour relier des conduites de fluide de manière à permettre la communication de fluide, la pièce d'angle (50) présentant une section de canal (52) pour modifier d'un angle de modification la direction d'écoulement d'un fluide s'écoulant à travers la pièce d'angle (50) et une pièce d'insertion (10) selon l'une quelconque des revendications précédentes, la pièce d'insertion (10) étant agencée dans la section de canal (52).
